# EUROPÄISCHE PATENTSCHRIFT

(11) **EP 0 896 508 B1**
(45) Veröffentlichungstag und Bekanntmachung des Hinweises auf die Patenterteilung: **25.04.2001**
(21) Anmeldenummer: 97908243.5
(22) Anmeldetag: 15.03.1997
(51) Int. Cl.: A23C 9/13, A23G 9/02

(54) **GEFRORENER JOGHURT UND VERFAHREN ZU DESSEN HERSTELLUNG**
FROZEN YOGHURT AND METHOD OF PRODUCING THE SAME
YAOURT CONGELE ET SON PROCEDE DE PREPARATION

(30) Priorität: 19.03.1996 DE 19610672
(43) Veröffentlichungstag der Anmeldung: 17.02.1999
(73) Patentinhaber: NZMP (Germany) GmbH, 25462 Rellingen (DE)
(72) Erfinder: PIPA, Fernando, D-25499 Tangstedt (DE); BAYER, Alexander, D-37603 Holzminden (DE)
(74) Vertreter: Siewers, Gescha, Dr.
(86) Internationale Anmeldenummer: EP9701320
(87) Internationale Veröffentlichungsnummer: WO9734498

(56) Entgegenhaltungen:
- EP-A- 0 438 201
- FR-A- 1 367 377
- US-A- 4 110 476
- US-A- 4 163 802
- US-A- 4 213 896
- US-A- 5 112 626
- SCANDINAVIAN DAIRY INFORMATION, Bd. 7, Nr. 4, 1993, Seite 37 XP002034575 E. STENBY: "High quality yoghurt cultures for frozen yoghurt"
- SCANDINAVIAN DAIRY INFORMATION , Bd. 9, Nr. 4, 1995, Seiten 29-31, XP000677673 J. WESTERBEEK: "Fermented ice cream products"
- SCANDINAVIAN DAIRY INFORMATION , Bd. 5, Nr. 4, 1991, Seiten 28-31, XP002034994 T: RIISOMS: "Milk proteins as fat replacers"
- CULTURED DAIRY PRODUCTS JOURNAL, Bd. 29, Nr. 1, 1994, Seiten 18-24, XP000677674 J. CHILDS: "An identity for frozen yogurt"

## Beschreibung

Die Erfindung betrifft gefrorenen Joghurt und Verfahren zu dessen Herstellung.

Gefrorener Joghurt, der manchmal nicht ganz korrekt auch als Joghurteiscreme bezeichnet wird, ist an sich bekannt und besteht aus einer Mischung fermentierter Milchprodukte und Zuckern, unter ggf. Zusatz von Verdickungsmitteln, Aromen oder anderen üblichen Zusätzen wie Fruchtmischungen und ähnlichem. So sind in der US-Patentschrift 4110476 derartige Produkte beschrieben, die mikrokristalline Zellulose als Stabilisator und Verdickungsmittel enthalten. Aus der europäischen Offenlegungsschrift 0 438 201 ist bekannt, daß man gefrorenen Joghurt unter Zusatz bestimmter Molkenproteinzubereitungen herstellen könnte, die aber einen unerwünscht geringen Aufschlag aufweisen; unter Aufschlag wird in der Eisherstellungstechnologie die prozentuale Volumenzunahme verstanden, die sich durch Belüftung während des Einfrierens der Eismasse im Verhältnis zur Ausgangsmasse ergibt. Eis mit geringem Aufschlag hat eine sehr feste, häufig als zu fest empfundene Textur, wodurch auch ein hoher Kaloriengehalt bedingt wird.

Weiterhin ist aus der europäischen Anmeldung 0 438 201 ein Verfahren zur Herstellung einer Joghurteiscreme mit hohem Aufschlag bekannt, bei dem eine Milchproteinzubereitung eingesetzt wird, bei der das Verhältnis in der Mischung aus Milchbestandteilen von Molkenproteinen, im folgenden als MP abgekürzt, zu Kaseinproteinen, im folgenden als KP abgekürzt, von mindestens 50 : 50 eingesetzt und das Produkt im übrigen in an sich bekannter Weise zu Eiscreme weiterverarbeitet wird. Die Weiterverarbeitung erfolgt in der Weise, daß die Milchanteile einschließlich der Milchproteinzubereitungen gemischt, die Mischung entlüftet, dann 30 Sek. auf 80°C erhitzt, homogenisiert, abgekühlt und mit Joghurtkulturen beimpft wird, wobei der pH bei etwa 5,5 bis 4,3 liegen soll. Erst danach wird der Kohlehydratanteil in Form von Zuckern zugesetzt, die Masse glattgerührt, 30 Sek. bei 80°C pasteurisiert, erneut homogenisiert und eingefroren. Diese Massen enthalten daher keine lebenden Keime. Zudem ist bei den beschriebenen Verfahren der Fettanteil der Eiscreme relativ hoch und liegt im Bereich von etwa 10%.

Es sind weiterhin folgende Druckschriften bekannt: US 4213896, US 5112626, Scandinavian Dairy Information Bd. 9, Nr. 4, 1995 Seiten 29-31, J. Westerbreek,, US 4163803, US 4110476 und FR 1367377, die ein Verfahren zur Herstellung ein Eiscreme oder gefrorenem Joghurt beschreiben. Alle diese Entgegenhaltungen beschreiben ein Verfahren zur Herstellung von einer Eiscreme oder Joghurt mit Emulgatoren bzw. Stabilisatoren.

Die Aufgabe der vorliegenden Erfindung besteht daher darin, ein Verfahren zur Herstellung des gefrorenen Joghurts ohne einen Zusatz von Emulgatoren bzw. Stabilisatoren vorzuschlagen.

Da zwischenzeitlich bekannt ist, daß Sauermilchprodukte mit lebenden Kulturen positive gesundheitliche Effekte aufweisen, so beispielsweise F.A.M. Klaver et al. in dmz, 22/1989, Seiten 678 pp., besteht eine große Nachfrage nach derartigen Joghurtzubereitungen, die mit Bifidobakterien oder Lactobazillen hergestellt werden. Gefrorener Joghurt oder sogenannte Joghurteiscreme mit lebenden Kulturen ist bisher nicht bekannt.

Erfindungsgemäß werden nunmehr gefrorene Joghurt auf Basis von fermentierten Milchbestandteilen und Milchproteinen mit einem Gehalt an lebenden Joghurtkulturen vorgeschlagen, der dadurch gekennzeichnet ist, daß das Verhältnis von Molkenproteinen : Kaseinproteinen in der Mischung aus Milchbestandteilen maximal 49,9 : 50,1 beträgt.

Überraschenderweise wurde festgestellt, daß sich bei Verwendung bestimmter Milchproteinenmischungen gefrorener Joghurt herstellen läßt, der verdickungsmittelfrei ist, lebende Joghurtkulturen enthält, in verschiedenen Fettstufen produziert werden kann und eine hervorragende Textur sowie gute Schmelzeigenschaften und gute Proportionierbarkeit aufweist. Im Gegensatz zu den Ausführungen in der europäischen Offenlegungsschrift 0 438 201, daß ein Verhältnis von MP : KP fordert, bei dem der Gehalt an Molkenprotein in der Mischung aus Milchbestandteilen überwiegt, werden erfindungsgemäß Proteinmischungen eingesetzt, bei denen das KP überwiegt, und zwar vorzugsweise im Verhältnis von etwa 1 : 2.

Die Grundmischung für die Herstellung des gefrorenen Joghurt besteht daher aus Vollmilch oder fettreduzierter oder entrahmter Milch, ggf. Sahne und zur Erhöhung der Trockenmasse Magermilchpulver, sowie bestimmten Milchproteinzubereitungen, die sich dadurch auszeichnen, daß eine 10%-ige Lösung dieser Milchproteine beim Erwärmen auf 90°C während einer Zeitspanne von 10 Min. kein Gel bildet. Diese Milchproteinzubereitungen können MP und KP in unterschiedlichen Anteilen enthalten, aber ausschlaggebend ist ihre Eigenschaft, unter bestimmten Bedingungen keine Gele auszubilden. Insgesamt muß aber, bezogen auf alle eingesetzten Milchbestandteile, der Gehalt an Kaseinproteinen demjenigen von Molkenprotein überwiegen, und zwar vorzugsweise im Verhältnis von etwa 2 : 1.

Das erfindungsgemäße Verfahren zur Herstellung von gefrorenem Joghurt geht von einer Mischung sämtlicher Milchkomponenten aus, die in flüssiger oder teilweise wie Magermilchpulver auch in fester Form vorliegen können. Diese Mischung wird mit dem gesamten oder dem überwiegenden Kohlehydrat-, insbesondere Zuckeranteil versetzt, der seinerseits auch in fester oder in flüssiger Form zur Anwendung kommen kann. Die Mischung wird dann auf etwa 60 bis 65°C vorgewärmt, zweistufig homogenisiert und daran anschließend in üblicher Weise pasteurisiert und auf Bebrütungstemperatur mit Joghurtkulturen abgekühlt. Nach Zusatz dieser Kulturen wird solange bebrütet, bis ein pH von etwa 4,3 erreicht worden ist, glattgezogen, evtl. die restliche Kohlehydratmenge zugegeben und dann nach der in der Eisherstellung üblichen Weise gefroren.

Die Homogenisierung erfolgt zweistufig bei 150 bis 180/50 bar. Pasteurisiert wird 30 Sek. bis maximal 10 Min. bei 90 bis 95°C. Die Mischungen werden dann auf etwa 43 bis 42°C oder einer anderen geeigneten Bebrütungstemperatur abgekühlt. Als Joghurtkulturen werden Milchsäurebakterien eingesetzt, und zwar entweder traditionelle oder probiotische Stämme, und zwar einzeln oder in Mischung wie beispielsweise *Lactobacillus delbrückkii ssp. bulgaricus*, *Streptococcus thermophilus, Bifidobacterium bifidum, Lactobacillus acidophilus oder Lactobacillus casei.* Die Inkubationszeit richtet sich nach dem erreichten pH-Wert, der im Bereich von pH 4,3, vorzugsweise 4,25 bis 4,35 angesiedelt sein sollte. Die Inkubation wird dann abgebrochen, sobald dieser pH-Wert erreicht ist. Nach Beendigung der Inkubation wird der Joghurt glattgezogen, abgekühlt und, wenn erwünscht, mit Fruchtzubereitungen versetzt. Der Fruchtanteil beträgt im Verhältnis zum Gesamtprodukt etwa 10 bis 20, vorzugsweise 15 Gew.-%.

Anschließend wird der Joghurt durch ein bei der Eisherstellung bekanntes übliches Gefriergerät aufgeschlagen, ausgefroren und abgefüllt. Überraschend war die Feststellung, daß diese Zubereitungen ohne Schwierigkeiten einen Aufschlag von 80 bis 90, teilweise bis 100% oder darüber erreichen können.

Die Produkte weisen eine cremige und weiche Struktur mit gutem Körper auf und zeigen gute Schmelzeigenschaften und eine hervorragende Proportionierbarkeit.

Im folgenden wird die Erfindung anhand der Beispiele näher beschrieben:

### Beispiel 1

Eine Vormischung wird zubereitet aus 62,57 kg Vollmilch mit einem Fettgehalt von 3,5 %, 9,52 kg 30%-iger Sahne, 3,56 kg einer Milchproteinmischung mit einem Gesamtproteingehalt von 78 %, die den in der Beschreibung dargestellten Anforderungen entspricht, 10,68 kg Glukosesirup und 2,67 kg Magermilchpulver. Diese Mischung wird auf 60 bis 65°C erwärmt und anschließend zweistufig mit 180 bar / 50 bar homogenisiert. Danach wird die Mischung pasteurisiert, und zwar bei einer Temperatur zwischen 90 bis 95°C bei einer Heißhaltezeit von 30 Sek. bis 10 Min. Die Mischung wird dann auf 43°C Bebrütungstemperatur abgekühlt und mit Joghurtkulturen beimpft. Hierbei können traditionelle Milchsäurebakterien wie Lb delbrückii ssp. bulgaricus oder Str. thermophilus oder Bb. bifidum, Lb acidophilus oder Lb casei - Stämme verwendet werden. Die Fermentation wird bei Erreichen eines pH-Wertes von 4,35 abgebrochen und die Joghurtmasse glattgezogen und anschließend mit 11,0 kg Kristallzucker versetzt und abgekühlt. Der Joghurt wird dann in einem üblichen Gefriergerät mit 80 bis 90 % Aufschlag ausgefroren und abgefüllt.

Das Produkt weist eine sehr cremige Struktur auf und hat gute Schmelz- und Proportionierbarkeitseigenschaften.

### Beispiel 2

Eine Vormischung wird zubereitet aus 72,09 kg Milch mit einem Milchfettgehalt von 7,0 %, 3,56 kg Milchproteinmischung mit einem Gesamtproteingehalt von 57 %, 10,68 kg Glukosesirup und 2,67 kg Magermilchpulver. Die Mischung wird auf 60 bis 65°C erwärmt und zweistufig bei 180 bar / 50 bar homogenisiert. Die Pasteurisierung erfolgt bei 95°C, woran sich das Abkühlen bis auf ca. 42°C Bebrütungstemperatur und die Beimpfung mit Joghurtkulturen anschließt. Bei einem pH-Wert von 4,30 wird die Joghurtmasse glattgezogen, abgekühlt und mit 20 Gew.-% Fruchtzubereitung, bezogen auf das Gesamtprodukt, versetzt. Bei Zitrusfrüchten beträgt die Zugabe vorzugsweise 15 Gew.-%, bezogen auf das Gesamtprodukt. Die fertige Mischung wird dann in einem üblichen Gefriergerät mit 80 bis 90 % Aufschlag ausgefroren und abgefüllt.

Dieses Produkt weist eine cremigere und weichere Struktur mit etwas weniger Körper auf als das Produkt aus Beispiel 1. Schmelz- und Proportionierbarkeitseigenschaften sind gut.

### Beispiel 3

Aus 50,0 kg Wasser, 8,67 kg Magermilchpulver, 17,5 kg 30%-iger Sahne und 3,56 kg Milchproteinmischung mit einem Proteingehalt von 78 %, 2,4 kg Volleipulver und 10,68 kg Glukosesirup wird eine Vormischung hergestellt, die auf 60 bis 65°C erwärmt und anschließend bei 180 bar / 50 bar homogenisiert wird. Die Mischung wird dann bei 95°C pasteurisiert und nach Abkühlung auf Bebrütungstemperatur inoculiert. Nach einer Fermentation bis auf pH 4,35 wird die Joghurtmasse glattgezogen, mit 11,0 kg Kristallzucker versetzt und abgekühlt. Ausfrieren und Abfüllung erfolgen mit einem Aufschlag mit 80 bis 90 %.

Dieses Produkt weist eine Struktur auf, die dem Produkt im Beispiel 1 ähnelt, aber einen etwas vollmundigeren Körper hat. Schmelzverhalten und Proportionierbarkeit sind ausgezeichnet.

## Patentansprüche

1. Gefrorener, verdickungsmittelfreier Joghurt, herstellbar unter Verwendung von fermentierten Milchbestandteilen einschließlich Milchproteinmischungen mit einem Verhältnis von Molkenprotein : Kaseinprotein von maximal 49,9 : 50,1, vorzugsweise 1 : 2, wobei die Gesamtmilchproteinmischung in 10%-iger wäßriger Lösung bei der Erwärmung auf 90°C während einer Zeitspanne von 10 Min. kein Gel bildet.

2. Gefrorener, verdickungsmittelfreier Joghurt nach einem der Ansprüche 1, dadurch gekennzeichnet, daß er lebende Joghurtkulturen, aufweist.

3. Gefrorener, verdickungsmittelfreier Joghurt nach Anspruch 2, dadurch gekennzeichnet, daß er *Lactobacillus casei* oder andere Milchsäurekulturen aufweist.

4. Gefrorener, verdickungsmittelfreier Joghurt nach einem der Ansprüche 1 bis 3, dadurch gekennzeichnet, daß der Fettgehalt deutlich unter 10 Gew.-%, vorzugsweise bei etwa 5 Gew.-% liegt.

5. Verfahren zur Herstellung eines gefrorenen, verdickungsmitelfreien Joghurt nach einem der Ansprüche 1 bis 4, dadurch gekennzeichnet, daß eine Milchproteinmischung eingesetzt wird, die in der Gesamtmischung aus Milchbestandteilen zu einem Verhältnis von Molkenprotein : Kaseinprotein von maximal 49,9 : 50,1, vorzugsweise 1 : 2 führt und in 10%-iger wäßriger Lösung bei der Erwärmung auf 90°C während einer Zeitspanne von 10 Min. kein Gel bildet, die Milchkomponenten und der gesamte oder überwiegende Gehalt an Kohlehydraten vermischt, auf etwa 60 bis 65°C vorgewärmt, zweistufig homogenisiert, pasteurisiert, abgekühlt, mit Milchsäurebakterien versetzt und bis zu einem pH von etwa 4,25 bis 4,35 bebrütet, glattgezogen, evtl. mit restlicher Kohlehydratmenge versetzt und in üblicher Weise gefroren werden.

6. Verfahren nach Anspruch 5, dadurch gekennzeichnet, daß der Aufschlag der Mischung beim Frieren etwa 80 bis über 100, vorzugsweise 80 bis 90 % beträgt.

7. Verwendung einer Milchproteinmischung zur Herstellung eines gefrorenen, verdickungsmittelfreien Joghurt, dadurch gekennzeichnet, daß die Milchproteinmischung ein Verhältnis von Molkenprotein : Kaseinprotein in der Gesamtmischung aus Milchbestandteilen von maximal 49,9 : 50,1, vorzugsweise 1 : 2 aufweist und in 10%-iger wäßriger Lösung bei der Erwärmung auf 90°C während einer Zeitspanne von 10 Min. kein Gel bildet.

## Claims

1. Frozen, thickener-free yoghurt, manufacturable with the use of fermented milk constituents including milk-protein mixtures with a whey-protein : casein-protein ratio of maximally 49.9 : 50.1, preferably 1 : 2, wherein the total milk-protein mixture in 10% aqueous solution does not form a gel when heated to 90 °C for 10 min.

2. Frozen, thickener-free yoghurt according to Claim 1, characterised in that it contains live yoghurt cultures.

3. Frozen, thickener-free yoghurt according to Claim 2, characterised in that it contains *Lactobacillus casei* or other lactic-acid cultures.

4. Frozen, thickener-free yoghurt according to one of Claims 1 to 3, characterised in that the fat content is substantially lower than 10% by weight, preferably about 5% by weight.

5. A method of manufacturing a frozen, thickener-free yoghurt according to one of Claims 1 to 4, characterised in that a milk-protein mixture is used which, in the total mixture of milk constituents, gives rise to a whey-protein : casein-protein ratio of maximally 49.9 : 50.1, preferably 1 : 2, and in 10% aqueous solution does not form a gel when heated to 90 °C for 10 min, the milk constituents and the total or predominating content of carbohydrates are mixed, pre-heated to about 60 to 65 °C, homogenised in two stages, pasteurised, cooled, treated with lactic-acid bacteria and incubated to a pH of about 4.25 to 4.35, drawn smooth, possibly treated with the residual carbohydrate, and frozen in the normal way.

6. A method according to Claim 5, characterised in that the volume increase of the mixture on freezing is about 80 to over 100%, preferably 80 to 90%.

7. Use of a milk-protein mixture for manufacturing a frozen, thickener-free yoghurt. characterised in that the milk-protein mixture has a whey-protein : casein-protein ratio in the total milk-constituent mixture of maximally 49.9 : 50.1, preferably 1 : 2 and in 10% aqueous solution does not form a gel when heated to 90 °C for 10 min.

## Revendications

1. Yaourt congelé exempt d'épaississant, que l'on peut préparer en utilisant des constituants du lait fermentés, y compris des mélanges de protéines du lait, avec un rapport lactoprotéines/caséines au plus égal à 49,9 : 50,1, de préférence égal à 1 : 2, le mélange total de protéines du lait en solution aqueuse à 10 % ne formant pas de gel lorsqu'on le chauffe pendant 10 minutes à une température de 90 °C.

2. Yaourt congelé exempt d'épaississant selon la revendication 1, caractérisé par le fait qu'il contient des cultures de yaourt vivantes.

3. Yaourt congelé exempt d'épaississant selon la revendication 2, caractérisé par le fait qu'il contient du *Lactobacillus casei* ou d'autres cultures de bactéries lactiques.

4. Yaourt congelé exempt d'épaississant selon une des revendications 1 à 3, caractérisé par le fait que sa teneur en matières grasses est nettement inférieure à 10 % en poids, et de préférence d'environ 5 % en poids.

5. Procédé de fabrication de yaourt congelé exempt d'épaississant selon une des revendications 1 à 4, caractérisé par le fait que l'on utilise un mélange de protéines du lait qui donne, dans le mélange total de constituants du lait, un rapport lactoprotéines/caséines au plus égal à 49,9 : 50,1, de préférence égal à 1:2, et qui, en solution aqueuse à 10 %, ne forme pas de gel lorsqu'on le chauffe pendant 10 minutes à une température de 90 °C, que l'on mélange les constituants du lait et la totalité ou la plus grande partie des hydrates de carbone, que l'on préchauffe à environ 60 à 65 °C, que l'on procède ensuite à une homogénéisation en deux étapes, puis à une pasteurisation, que l'on refroidit, que l'on y ajoute des bactéries lactiques et que l'on incube jusqu'à obtention d'un pH d'environ 4,25 à 4,35, que l'on lisse le mélange, que l'on y ajoute éventuellement la partie restante d'hydrates de carbone, et que l'on congèle le produit obtenu de manière habituelle.

6. Procédé selon la revendication 5, caractérisé par le fait que le taux de gonflement du mélange lors de la congélation est compris entre environ 80 % et plus de 100 %, de préférence entre 80 % et 90 %.

7. Utilisation d'un mélange de protéines du lait pour la préparation d'un yaourt congelé exempt d'épaississant, caractérisée par le fait le mélange de protéines du lait présente un rapport lactoprotéines/caséines dans le mélange total de constituants du lait au plus égal à 49,9 : 50,1 et de préférence égal à 1 : 1 et par le fait qu'en solution aqueuse à 10 % il ne forme pas de gel lorsqu'on le chauffe pendant 10 minutes à une température de 90 °C.
